## Europäisches Patentamt
## European Patent Office
## Office européen des brevets

(19)

(11) Veröffentlichungsnummer: **0 043 363**
**B1**

(12) ## EUROPÄISCHE PATENTSCHRIFT

(45) Veröffentlichungstag der Patentschrift:
12.09.84

(51) Int. Cl.³: **A 62 C 5/02**

(21) Anmeldenummer: **81890083.9**

(22) Anmeldetag: **19.05.81**

(54) Zumischeinrichtung zum Erzeugen eines Wasser-Schaummittelgemisches, insbesondere für Feuerlöschzwecke.

(30) Priorität: **23.05.80 AT 2772/80**

(43) Veröffentlichungstag der Anmeldung:
**06.01.82 Patentblatt 82/1**

(45) Bekanntmachung des Hinweises auf die Patenterteilung:
**12.09.84 Patentblatt 84/37**

(84) Benannte Vertragsstaaten:
**DE FR GB IT NL SE**

(56) Entgegenhaltungen:
**CH - A - 292 599**
**CH - A - 384 230**
**DE - B - 1 498 477**
**DE - B - 2 110 704**
**DE - C - 367 722**
**DE - C - 865 814**
**DE - C - 883 662**
**US - A - 2 769 500**
**US - A - 3 040 758**

(73) Patentinhaber: **Konrad Rosenbauer K.G.,**
**Paschingerstrasse 90, A-4060 Leonding (AT)**

(72) Erfinder: **Staudinger, Hermann, Florianerstrasse 14,**
**A-4501 Neuhofen (AT)**

(74) Vertreter: **Hübscher, Gerhard, Dipl.-Ing. et al,**
**Patentanwälte Dipl.-Ing. Gerhard Hübscher Dipl.-Ing.**
**Helmut Hübscher Dipl.-Ing. Heiner Hübscher**
**Spittelwiese 7, A-4020 Linz (AT)**

## Beschreibung

Die Erfindung betrifft eine Zumischeinrichtung zum Erzeugen eines Wasser-Schaummittelgemisches, insbesondere für Feuerlöschzwecke, mit einem Zumischer, in dessen Mischraum eine Wasserdruckleitung und eine Schaummittelleitung münden, wobei die Schaummittelzufuhr über ein Regelorgan regelbar ist, das mit einer den Einlassquerschnitt für die Wasserzuströmung bestimmenden, gegen die Strömungsrichtung im Schliessinn federbelasteten Steuerklappe in Drehverbindung steht.

Solche Zumischer arbeiten bisher, wie z.B. aus der CH-A-384 230 und der DE-C-883 662 hervorgeht, mit über Blenden, Venturidüsen oder dergleichen Drosselstellen erzeugten Druckdifferenzen, durch die das Schaummittel in den Mischraum eingesaugt wird, wobei vom Hauptstrom im Bereich der Drosselstelle ein das Schaummittel beaufschlagender Nebenstrom abzweigt. Zur Regelung der Schaummittelzufuhr gibt es an der Drosselstelle eine Steuerklappe, die gemäss der CH-A-384 230 mit einer als Regelorgan wirkenden Gegenklappe drehfest verbunden ist und über diese Gegenklappe den Nebenstrom in Abhängigkeit vom Hauptstrom drosselt oder absperrt. Es kommt zu beträchtlichen und sehr unerwünschten Druckverlusten, der Bauaufwand ist wegen der Drosselstelle und der Nebenleitung recht hoch und die exakte Einhaltung der Zumischrate verlangt aufgrund der druckabhängigen Steuerung vor allem bei geringen Durchflussmengen zusätzliche Massnahmen. Diese Zumischeinrichtungen sind daher auch für einen Löschbetrieb vom Hydrantennetz aus vollkommen ungeeignet. Ausserdem erlauben sie praktisch nur eine zentrale Zumischung des Schaummittels in den Hauptstrom, so dass zwangsweise alle Verbraucheranschlüsse stets gleichartig entweder mit Wasser oder Schaum versorgt werden und eine gleichzeitige Entnahme von Wasser und Schaum ausgeschlossen ist.

Zum Zumischen eines Schaum- oder Netzmittels zum Löschwasser sind beispielsweise nach der DE-B-2 110 704 auch bereits Vormischer bekannt, bei denen mit dem Wasserdruck der Hauptpumpe über eine Strahlpumpe das Schaummittel angesaugt und das entstehende Wasser-Schaummittelgemisch der Saugseite der Wasserpumpe zugeführt wird, die es dann zu den jeweils angeschlossenen Schaumstrahlrohren u. dgl. fördert. Hier sind zur Zumischregelung in der Pumpendruckleitung und in der Schaummittelleitung miteinander über Gestänge verbundene Steuerklappen vorgesehen, durch die die Schaummittelzufuhr zur Strahlpumpe in Abhängigkeit vom Druck der Pumpenleitung dosiert wird. Damit wird allerdings die Dosierung vom Druck des Wasser-Schaummittelgemisches bestimmt, was nur eine sehr ungenaue Einstellung der Zumischrate erlaubt, und zudem gibt es wiederum durch die Strahlpumpe, die Rückleitung und die Steuereinrichtungen einen entsprechenden Mehraufwand und auch Druckverluste. Weiters sind diese Vormischer nur im direkten Zusammenhang mit Feuerlöschpumpen und daher ebenfalls nicht bei einem Betrieb vom Hydrantennetz aus einzusetzen und auch alle Verbraucheranschlüsse müssen immer mit Wasser oder Schaum gleichartig versorgt werden.

Der Erfindung liegt daher die Aufgabe zugrunde, diese Mängel zu beseitigen und eine Zumischeinrichtung der eingangs geschilderten Art zu schaffen, die eine Schaumerzeugung ohne Druckverlust für die Pumpendruckleitung erlaubt, einen vollautomatischen, funktionssicheren Betrieb gewährleistet, auch bei nur einer Pumpe für mehrere Verbraucherstellen ein wahlweises und gleichzeitiges Entnehmen von Wasser und/oder Schaum ermöglicht sowie auf einfache Weise eine genaue Regelung und wunschgemässe Dosierung des jeweiligen Schaummittelzusatzes mit sich bringt.

Die Erfindung löst diese Aufgabe dadurch, dass für die Schaummittelzufuhr eine eigenständige, von der Wasserförderung unabhängige Druckquelle vorgesehen ist und als Regelorgan ein der Mündung der Schaummittelleitung zugeordneter Steuernocken dient, der sich bei einem Aufschwenken der Steuerklappe im Öffnungssinn der Schaummittelleitung verdreht und entsprechend der Nockenform einen von der Steuerklappenschwenklage abhängigen Eintrittsspalt für das Schaummittel einstellt. Wenn beispielsweise dem Zumischer das Schaummittel mit über einen Druckspeicher, eine eigene Pumpe u. dgl. aufgebrachtem Druck zugefördert wird, erübrigt es sich, auf Kosten des Wasserdruckes eine Druckdifferenz zum Ansaugen des Schaummittels hervorrufen zu müssen, so dass die Zumischeinrichtung praktisch unabhängig von der Art der Löschwasserzufuhr eingesetzt werden kann und genauso für einen Saugbetrieb einer Feuerlöschpumpe wie für einen Betrieb vom Hydrantennetz aus geeignet ist. Durch den mit der Steuerklappe gekoppelten Steuernocken wird die Schaummittelzumischung exakt an die vorhandene Wassermenge angepasst, wobei sich der entstehende Eintrittsspalt mit dem Grad des Aufschwenkens der Steuerklappe der Grösse nach ändert und die Zusatzmenge an Schaummittel automatisch auf die jeweilige Wasserzufuhr bzw. Fördermenge der Feuerlöschpumpe abgestimmt wird. Durch die den Eintrittsspalt bestimmende Form des Steuernockens, die im einfachsten Fall ein Exzenter sein kann, lassen sich die auftretenden Strömungs- und Betriebsverhältnisse gut berücksichtigen und stets gleichbleibende Mischverhältnisse zwischen Wasser und Schaummittel erreichen. Da der Wasserdruck im Mischer nur mehr zur Bewegung der Steuerklappe herangezogen wird, kommt es praktisch zu keinem spürbaren Druckverlust in der Druckleitung der Feuerlöschpumpe und durch die eigene Reglerfunktion des Zumischers ist die Anordnung dieses Zumischers an jeder beliebigen Stelle der Pumpendruckleitung, also auch direkt im Bereich der Verbraucheranschlussstellen möglich, so dass an jeder dieser Anschlussstellen die Entnahme entweder von Löschwasser allein oder von Schaum zu wählen ist, und zwar unabhängig von den jeweiligen Entnahmen an den anderen Verbraucherstellen. Der Zumischer selbst ist aufgrund seiner Kombination zwischen Druckmischer einerseits und Regler anderseits auch kompakt in seiner Bauweise und störungsunanfällig im Betrieb.

Vorteilhaft ist es, wenn in den Zumischer eine zweite Schaummittelleitung mündet, der ebenfalls ein Steuernocken zugeordnet ist, wobei beide Schaummittelleitungen jeweils ein eigenes Sperrventil aufweisen. Mit dieser zweiten Schaummittelzuleitung können auf einfachste Weise zwei Zumischraten eingestellt werden, da hiezu ja nur eine oder beide Schaummittelzuleitungen geöffnet zu werden brauchen. Für einen reinen Wasserbetrieb sind selbstverständlich beide Sperrventile geschlossen.

Da die Dosierung des Schaummittels von der jeweiligen Grösse des Eintrittsspaltes abhängt, sind günstigerweise die Steuernocken austauschbar, da so die entstehenden Eintrittsspalte und damit die Dosierung an verschiedene Einsatzbedingungen angepasst werden können. Eine weitere Verbesserung der Schaummitteldosierung ergibt sich, wenn der Zumischer einen Mündungseinsatz für die Schaummittelzufuhr aufnimmt, der eine mit den Steuernocken zusammenwirkende Steuerfläche bildet. Diese Steuerfläche erlaubt nicht nur einen dichten Abschluss der Schaummittelzufuhr bei geschlossener Steuernocke, sondern ermöglicht zusätzlich eine geeignete Ausgestaltung des Eintrittsspaltes, der ja zwischen dieser Steuerfläche und der Steuernockenoberfläche entsteht.

Eine konstruktiv günstige Ausgestaltung der Erfindung ergibt sich, wenn der Zumischer aus einem im wesentlichen kreiszylindrischen Gehäuse besteht, das einen etwa tangentialen Anschlussstutzen für die Wasserdruckleitung, einen dazu winkelversetzten etwa tangentialen Abgangsstutzen für die Verbraucherleitung und ein bzw. zwei zwischen den beiden Stutzen liegende Mündungsrohre für die Schaummittelleitung aufweist, wobei Steuerklappe und Steuernocken drehfest auf einer gemeinsamen, vorzugsweise exzentrisch im Gehäuse gelagerten Welle sitzen und sich der im Gehäuse an das bzw. die Mündungsrohre anschliessende Mündungseinsatz radial zur Welle erstreckt. Die Welle stellt nicht nur die Halterung von Steuerklappe und Steuernocken dar, sondern auch die Drehverbindung zwischen Steuerklappe und Steuernocken, so dass sich auf engem Raum eine funktionssichere Zuordnung dieser Steuerelemente ergibt. Ausserdem wird eine einfache Ausbildung des Zumischers ermöglicht, der sich dabei schwierigkeitslos auf geeignete Strömungsverhältnisse abstimmen lässt und ein ordnungsgemässes Zusammenwirken zwischen Steuerfläche des Mündungseinsatzes und der Steuernocken gewährleistet.

In einer besonders vorteilhaften Weiterentwicklung der Erfindung ist dem Zumischer ein Differenzdruckregler zugeordnet, der den Druck des zugeförderten Schaummittels in Abhängigkeit vom Druck des zuströmenden Wassers regelt. Diese Druckregeleinrichtung sorgt demnach immer für einen konstanten Druckunterschied zwischen Wasser- und Schaummitteldruck, was nicht nur eine exakte Dosierung garantiert, sondern auch den Zumischvorgang selbst stabilisiert. Der Zumischregler selbst kann in geeigneter Weise ausgebildet sein, beispielsweise aus einem federbelasteten Steuerkolben bestehen, der einerseits vom Wasser, anderseits vom Schaummittel beaufschlagt ist und je nach Druckdifferenz zwischen Wasser und Schaummittel mehr oder weniger freigibt.

Günstig ist es weiters, wenn jede Verbraucheranschlussstelle eines Feuerlöschaggregates einen eigenen Zumischer aufweist, welchen Zumischern eine gemeinsame Schaummittelversorgung mit einzeln absperrbaren Zweigleitungen der Schaummittelleitung zugeordnet ist. So können mit einer einzigen Schaummittelpumpe, einem einzigen Schaummitteltank, einem einzigen Differenzdruckregler gleichzeitig mehrere Zumischer mit Schaummittel versorgt werden, wodurch ohne grossen Aufwand wirklich an jeder Verbraucherstelle ein eigener Zumischer vorgesehen sein kann, der die gewünschte Entnahme von Wasser oder Schaum ermöglicht.

In der Zeichnung ist der Erfindungsgegenstand in einem Ausführungsbeispiel dargestellt, und zwar zeigen

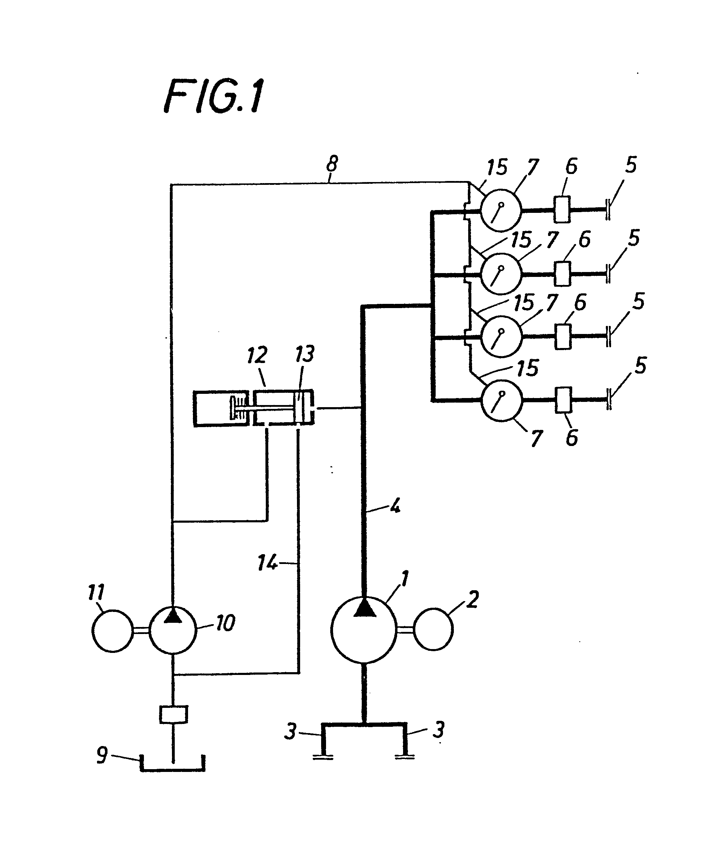

Fig. 1 ein Schaltschema einer erfindungsgemässen Zumischeinrichtung und die

Fig. 2 und 3 einen Zumischer dieser Zumischeinrichtung im Querschnitt bzw. im Axialschnitt nach der Linie III–III der Fig. 2.

Eine Feuerlöschpumpe 1 wird vom Fahrmotor 2 des Feuerlöschfahrzeuges angetrieben und fördert Löschwasser im Hydrantenbetrieb bzw. im Saugbetrieb über entsprechende Anschlüsse 3 durch eine Wasserdruckleitung 4 zu mehreren parallelgeschalteten Verbraucheranschlussstellen 5, die jeweils über Ventile 6 absperrbar sind. Jeder Anschlussstelle 5 ist dabei ein eigener Zumischer 7 zugeordnet, welche Zumischer 7 über eine gemeinsame Schaummittelleitung 8 mit einem Schaummittelbehälter 9 verbunden sind, wobei eine Schaummittelpumpe 10 mit einem eigenen Antriebsmotor 11 für die Schaummittelförderung aus dem Tank 9 zu den Zumischern 7 sorgt. Um einen konstanten Druckunterschied zwischen Wasser- und Schaummitteldruck zu erreichen, ist ein Differenzdruckregler 12 vorgesehen, der mittels eines vom Wasserdruck beaufschlagten federbelasteten Kolbens 13 eine Rückleitung 14 für das Schaummittel in Abhängigkeit von den herrschenden Druckverhältnissen in der Wasserdruckleitung 4 und der Schaummittelleitung 8 öffnet oder schliesst und damit ein unerwünschtes Ansteigen des Schaummitteldruckes relativ zum Wasserdruck verhindert. Da die Zweigleitungen 15 zum Anschluss der Zumischer 7 an die Schaummittelleitung 8 in nicht näher dargestellter Weise einzeln absperrbar sind, können nun an den Verbraucheranschlussstellen 5 je nach Wunsch und voneinander unabhängig nur Löschwasser oder Schaum entnommen werden, wobei die Zumischer 7 immer für eine gute Dosierung des Schaummittelzusatzes sorgen.

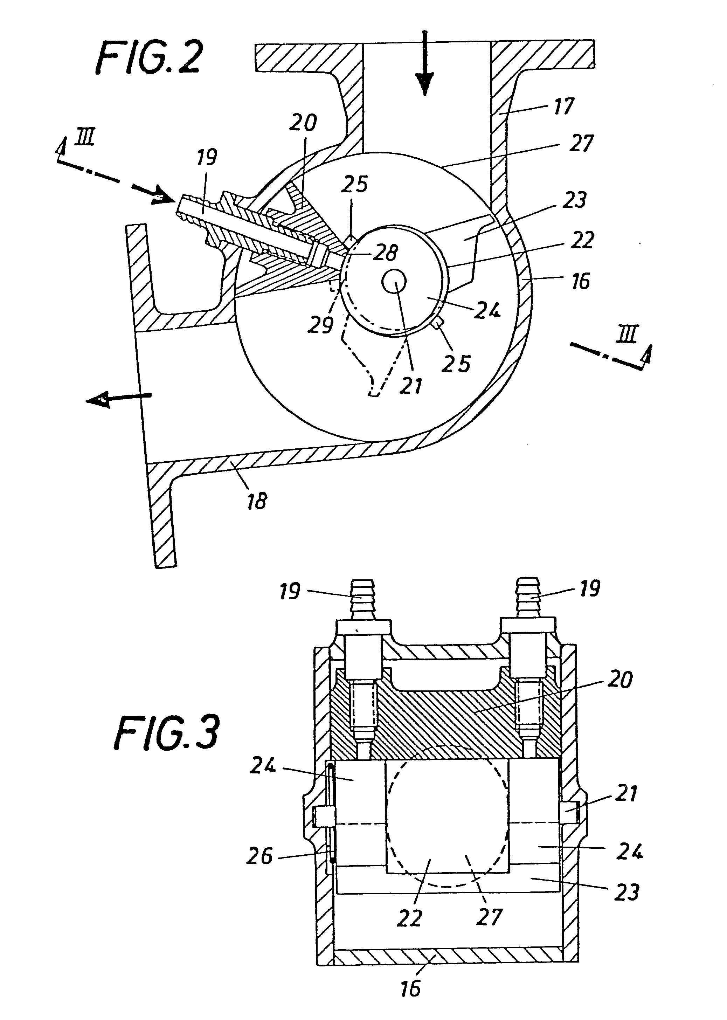

Jeder Zumischer 7 besteht aus einem im wesentlichen kreiszylindrischen Gehäuse 16, das einen etwa tangentialen Anschlussstutzen 17 für die Wasserdruckleitung 4 und einen ebenfalls etwa tangentialen Abgangsstutzen 18 für die Verbraucherleitung der Anschlussstellen 5 aufweist. Ausserdem sind zwischen den beiden Stutzen 17, 18 zwei nebeneinanderliegende Mündungsrohre 19 für zwei Zweigleitungen 15 zur Schaummittelzufuhr vorgesehen, welche Mündungsrohre 19 innerhalb des Gehäuses 16 in einen nach innen vorragenden Mündungseinsatz 20 übergehen. Im Gehäuse 16 ist nun exzentrisch zur Gehäuseachse eine Welle 21 drehbar gelagert, auf der drehfest eine walzenförmige Aufnahme 22 für eine Steuerklappe 23 sowie beidseits dieser Aufnahme 22 je eine Steuernocke 24 in Form eines Exzenters sitzen. Die Welle 21 und mit ihr die Steuernocken 24 und die Steuerklappe 23 sind innerhalb eines von Anschlägen 25 begrenzten Winkelbereiches drehbar und werden von einer Ringfeder 26 im Schliessinn der Steuerklappe 23 belastet. Die Steuerklappe 23 ist nun dem Einlass 27 des Wassers zugeordnet und bestimmt je nach Schwenklage den Durchströmquerschnitt für das Druckwasser. Die Steuernocken 24 werden durch die Drehung der Welle 21 beim Verschwenken der Steuerklappe 23 von der durch den Mündungseinsatz 20 gebildeten Steuerfläche 28 abgehoben, so dass sich entsprechend der Form der Steuernocken 24 ein Eintrittsspalt 29 ergibt, dessen Grösse mit zunehmender Schwenklage der Steuerklappe 23 bis zu einem Maximalwert zunimmt (strichlierte Darstellung in Fig. 2).

Das einströmende Wasser bewirkt durch seinen Strömungsdruck ein Aufschwenken der Steuerklappe 23 gegen die Belastung der Feder 26, wodurch sich gleichzeitig mit dem Wassereintritt der Eintrittsspalt 29 für den Zufluss des Schaummittels öffnet, wobei die voneinander abhängigen Eintrittsquerschnitte für Wasser und Schaummittel die gewünschte Dosierung der Schaummittelzumischung sicherstellen. Die Zumischrate selbst kann darüber hinaus in zwei Stufen vorgewählt werden, da die Schaummittelzufuhr zu den beiden Mündungsrohren 19 unabhängig voneinander ist und daher einmal Schaummittel über nur ein Mündungsrohr 19 oder über beide Mündungsrohre 19 zuströmen und durch den Eintrittsspalt 29 in den Mischer gelangen kann. Die von der Stellung der Steuerklappe 23 abhängige Grösse des Eintrittsspaltes 29 bringt dabei automatisch die entsprechende Dosierung dieses Schaummittels für jede der beiden Zumischraten mit sich, so dass durch den Abgangsstutzen 18 ein stets gleichbleibendes Wasser-Schaumgemisch abgezogen werden kann.

**Patentansprüche**

1. Zumischeinrichtung zum Erzeugen eines Wasser-Schaummittelgemisches, insbesondere für Feuerlöschzwecke, mit einem Zumischer (7), in dessen Mischraum eine Wasserdruckleitung (4) und eine Schaummittelleitung (8) münden, wobei die Schaummittelzufuhr über ein Regelorgan regelbar ist, das mit einer den Einlassquerschnitt für die Wasserzuströmung bestimmenden, gegen die Strömungsrichtung im Schliesssinn federbelasteten Steuerklappe (23) in Drehverbindung steht, dadurch gekennzeichnet, dass für die Schaummittelzufuhr eine eigenständige, von der Wasserförderung unabhängige Druckquelle (10) vorgesehen ist und als Regelorgan ein der Mündung der Schaummittelleitung (8) zugeordneter Steuernocken (24) dient, der sich bei einem Aufschwenken der Steuerklappe (23) im Öffnungssinn der Schaummittelleitung (8) verdreht und entsprechend der Nockenform einen von der Steuerklappenschwenklage abhängigen Eintrittsspalt (29) für das Schaummittel einstellt.

2. Zumischeinrichtung nach Anspruch 1, dadurch gekennzeichnet, dass in den Zumischer (7) eine zweite Schaummittelleitung (15) mündet, der ebenfalls ein Steuernocken (24) zugeordnet ist, wobei beide Schaummittelleitungen (15) jeweils ein eigenes Sperrventil aufweisen.

3. Zumischeinrichtung nach Anspruch 1 oder 2, dadurch gekennzeichnet, dass die Steuernocken (24) austauschbar sind.

4. Zumischeinrichtung nach einem der Ansprüche 1 bis 3, dadurch gekennzeichnet, dass der Zumischer (7) einen Mündungseinsatz (20) für die Schaummittelzufuhr aufnimmt, der eine mit den Steuernocken (24) zusammenwirkende Steuerfläche (28) bildet.

5. Zumischeinrichtung nach Anspruch 4, dadurch gekennzeichnet, dass der Zumischer (7) aus einem im wesentlichen kreiszylindrischen Gehäuse (16) besteht, das einen etwa tangentialen Anschlussstutzen (17) für die Wasserdruckleitung, einen dazu winkelversetzten etwa tangentialen Abgangsstutzen (18) für die Verbraucherleitung und ein bzw. zwei zwischen den beiden Stutzen liegende Mündungsrohre (19) für die Schaummittelleitung aufweist, wobei Steuerklappe (23) und Steuernocken (24) drehfest auf einer gemeinsamen, vorzugsweise exzentrisch im Gehäuse (16) gelagerten Welle (21) sitzen und sich der im Gehäuse an das bzw. die Mündungsrohre (19) anschliessende Mündungseinsatz (20) radial zur Welle (21) erstreckt.

6. Zumischeinrichtung nach einem der Ansprüche 1 bis 5, dadurch gekennzeichnet, dass dem Zumischer (7) ein Differenzdruckregler (12) vorgeordnet ist, der den Druck des zugeförderten Schaummittels in Abhängigkeit vom Druck des zuströmenden Wassers regelt.

7. Zumischeinrichtung nach einem der Ansprüche 1 bis 6 in Form eines Feuerlöschaggregats, dadurch gekennzeichnet, dass jede Verbraucheranschlussstelle (5) des Feuerlöschaggregates (1) einen eigenen Zumischer (7) aufweist, welchen Zumischern eine gemeinsame Schaummittelversorgung (8, 9, 10, 11, 12) mit einzeln absperrbaren Zweigleitungen (15) der Schaummittelleitung (8) zugeordnet ist.

**Claims**

1. An admixing device for producing a mixture of water and foaming agent, comprising an admixer (7) having a mixing chamber, into which a pressure water line (4) and a foaming agent line (8) open, wherein the supply of foaming agent is controllable by means of a control member, which is non-rotatably connected to a hinged control valve (23), which controls the inlet crosssection for the water supply and is spring-biased in the closing sense opposite to the direction of flow, characterized in that a pressure source (10), which is independent of the supply of water is provided for the supply of foaming agent and the control member consists of a control cam (24), which is associated with the outlet opening of the foaming agent line (8) and in response to a pivotal opening movement of the hinged control valve (23) rotates in a sense to open the foaming agent line (8) and in dependence on the shape of the cam adjusts for the foaming agent an inlet gap (29) which depends on the angular position of the hinged control valve.

2. An admixing device according to claim 1, characterized in that a second foaming agent line (15) opens into the admixer (7), another control cam (24) is associated with the second foaming agent line (24), and each foaming agent line (15) is provided with a separate shut-off valve.

3. An admixing device according to claim 1 or 2, characterized in that the control cams (24) are replaceable.

4. An admixing device according to any of claims 1 to 3, characterized in that the admixer (7) receives an insert (20) defining an outlet opening for the supply of foaming agent and said insert has a valve surface (28) which cooperates with the control cam (24).

5. An admixing device according to claim 4, characterized in that the admixer (7) consists of a substantially circularly cylindrical housing (16), which comprises an approximately tangential connecting pipe (17) for the pressure water line, an approximately tangential outlet connection pipe (18) for the consumer line, which outlet connection pipe is angularly spaced from the connection pipe for the pressure water line, and one or two outlet pipes (19) for the foaming agent line, which outlet pipe or pipes is or are disposed between the two connection pipes, wherein the hinged control valve (23) and the control cam (24) are non-rotatably connected to a common shaft (21), which is preferably eccentrically mounted in the housing, and the insert (20) defining the outlet opening adjoins the outlet pipe or pipes (19) in the housing and extends radially of the shaft (21).

6. An admixing device according to any of claims 1 to 5, characterized in that the admixer (7) is preceded by a differential pressure controller (12), which controls the pressure of the supplied foaming agent in dependence on the pressure of the inflowing water.

7. An admixing device according to any of claims 1 to 6 consisting of a fire-extinguishing unit, characterized in that each consumer port (5) of the fire-extinguishing unit (1) is provided with a separate admixer (7), and a common foaming agent supply system (8, 9, 10, 11, 12), in which the foaming agent line (8) is provided with branch lines (15) that can be individually shut off, is associated with said admixers.

**Revendications**

1. Dispositif de mélange pour l'obtention d'un mélange d'eau et d'agent moussant, en particulier pour les usages d'extinction d'incendie, comportant un mélangeur (7) dans la cavité du mélange duquel débouchent un tuyau de pression d'eau (4) et un tuyau à agent moussant (8), l'amenée d'agent moussant pouvant être réglée par un organe de réglage qui est en liaison de rotation avec un clapet de commande (23) sollicité élastiquement dans le sens de fermeture à l'envers du sens d'écoulement et déterminant l'afflux d'eau, caractérisé par le fait que, pour l'amenée d'agent moussant, est prévue une source de pression spéciale (10), indépendante de l'amenée d'eau et que, comme organe de réglage, est utilisée une came de commande (24) adjointe à l'embouchure de tuyau à agent moussant (8), qui tourne lorsqu'on fait pivoter le clapet de commande (23) dans le sens d'ouverture du tuyau à agent moussant (8) et règle, conformément à la forme de la came, un interstice d'entrée (29) de l'agent moussant, dépendant de la position de pivotement du clapet de commande.

2. Dispositif de mélange selon la revendication 1, caractérisé par le fait que dans le mélangeur (7) débouche un deuxième tuyau à agent moussant (15) auquel est également adjointe une came de commande (24), les deux tuyaux à agent moussant (15) présentant chacun une valve d'isolement particulière.

3. Dispositif de mélange selon l'une quelconque des revendications 1 et 2, caractérisé par le fait que les cames de commande (24) sont interchangeables.

4. Dispositif de mélange selon l'une quelconque des revendications 1 à 3, caractérisé par le fait que le mélangeur (7) loge un élément d'embouchure inséré (20) servant à l'amenée d'agent moussant et qui forme une surface de commande (28) coopérant avec la came de commande (24).

5. Dispositif de mélange selon la revendication 4, caractérisé par le fait que le mélangeur (7) est formé d'une enveloppe (16) ayant pratiquement une forme cylindrique de révolution qui présente une tubulure de raccordement (17) à peu près tangentielle pour le tuyau de pression d'eau, une tubulure de sortie (18) à peu près tangentielle, décalée angulairement par rapport à la précédente, destinée au tuyau de consommateur et un ou deux tubes d'embouchure (19) situés entre les deux tubulures, destinés au tuyau à agent moussant, le clapet de commande (23) et la came de commande (24) étant montés de façon solidaire en rotation sur un arbre commun (21), de préférence montée excentriquement dans l'enveloppe, et l'élément d'embouchure inséré (20), qui se raccorde dans l'enveloppe au(x) tube(s) d'embouchure (19), étant dirigé radialement à l'arbre (21).

6. Dispositif de mélange selon l'une quelconque des revendications 1 à 5, caractérisé par le fait, qu'avant le mélangeur (7) est placé un organe de réglage de pression différentielle (12), qui règle la pression de l'agent moussant amené en fonction de la pression de l'eau qui afflue.

7. Dispositif de mélange selon l'une des revendications 1 à 6, sous forme de groupe d'extinction d'incendie, caractérisé par le fait que chaque point de raccordement de consommateur (5) du groupe d'extinction d'incendie (1) présente un mélangeur spécial (7) et qu'à ces mélangeurs est adjointe une alimentation commune en agent moussant (8, 9, 10, 11, 12) qui est munie de tuyaux de branchement (15) du tuyau à agent moussant (8) qui peuvent être fermés individuellement.

# FIG.1

# FIG.2

# FIG.3